# DEMANDE DE BREVET EUROPEEN

(11) **EP 1 720 234 A1**
(43) Date de publication de la demande: **08.11.2006**
(21) Numéro de dépôt: 05405343.4
(22) Date de dépôt: 06.05.2005
(51) Int. Cl.: H02K 7/075, H02K 7/065

(54) **Procédé pour mouvoir au moins un piston à l'aide d'un actionneur électrique agissant comme substitut de la force d'action d'au moins un moteur ou une machine**

(71) Demandeur: Bredean, Gavril, 1290 Versoix (CH)
(72) Inventeur: Roux, Claude, 93290 Tremblay en France (FR)
(74) Mandataire: Savatier, Yves

(57) **Abrégé**

La présente invention concerne un procédé pour mouvoir au moins un piston à l'aide d'au moins un actionneur électrique (2) agissant comme substitut de la force d'action d'au moins un moteur ou une machine utilisant au moins un piston à fonctionnement cyclique. Ce procédé est destiné pour être mis en oeuvre dans des moteurs et machines pour qu'ils fonctionnent sans l'utilisation de l'explosion créée par la combustion interne.

## Description

La présente invention concerne un procédé pour mouvoir au moins un piston à l'aide d'un actionneur électrique agissant comme substitut de la force d'action d'au moins un moteur ou une machine utilisant au moins un piston à fonctionnement cyclique. Ce procédé est plus particulièrement destiné à être mis en oeuvre dans des moteurs et machines pour qu'ils fonctionnent sans l'utilisation de l'explosion créée par la combustion interne.

Les actionneurs électriques et leurs systèmes de commande sont de plus en plus présents dans tous les secteurs industriels, mais les applications de ces actionneurs sont limitées à des domaines techniques très spécifiques : Robotique, Avionique, Traction Electrique et Sidérurgie. Leur puissance et leur faible consommation d'énergie les rendent propices à être inclus dans des moteurs ou autres machines ou engins utilisant des pistons à fonctionnement cyclique. Avant même la découverte du principe du moteur à explosion on utilisait déjà au 17ème siècle le principe du monocylindre à mouvement alternatif de pistons, dans des machines à vapeur. C'est n'est qu'en 1884 que Gottlieb Daimler a mis au point le premier moteur 4 temps à carburation dans un véhicule roulant. De nos jours, la quasi-totalité des véhicules automobiles qui sortent d'usine sont équipés de moteurs à combustion interne, fiables, robustes mais polluants. On connaît aussi les véhicules à moteurs électriques qui sont propres mais ont actuellement un rendement et autonomie insuffisants pour une utilisation sur des longs trajets. Quant aux véhicules hybrides combinant un moteur à combustion interne et un moteur électrique, ils permettent de rouler propre en ville mais le rendement et l'autonomie en fonctionnement électrique sont faibles et le temps de recharge des batteries trop important.

L'objectif de l'invention consiste notamment à :
- créer un procédé unique à vocation universelle qui allie les avantages des procédés déjà existants, notamment la puissance, la fiabilité et l'autonomie en fonctionnement des moteurs à combustion interne et la propreté des moteurs électriques,
- trouver un substitut non polluant à la force d'opération des moteurs,
- créer un procédé très largement utilisable en modifiant les moteurs déjà existants et ceux nouvellement créés afin d'inclure le procédé.

Cet objectif est atteint par l'invention telle que définie par les revendications.

Le procédé selon l'invention est un procédé unique, à vocation universelle, qui peut être combiné à d'autres procédés déjà existants et qui permet aux moteurs et machines utilisant des pistons à fonctionnement cyclique de fonctionner sans l'utilisation de l'explosion créée par la combustion interne. L'utilisation de ce procédé rend possible la réalisation de moteurs non polluants, fiables, à bon rendement énergétique, de puissance modulable et d'autonomie en fonctionnement importante.

Le procédé de l'invention consiste à faire mouvoir au moins un piston avec l'aide d'au moins un actionneur électrique, tel que par exemple un vérin électrique, un vérin électromécanique, un vérin électrohydraulique, un vérin électromagnétique, notamment à déplacement linéaire ou rotatif et à sens unique ou à double sens, dont la force d'action remplace la force qui entraîne habituellement des pistons, telle que par exemple l'explosion dans les moteurs à combustion interne. Ce procédé est destiné à être mis en oeuvre dans au moins un moteur ou une machine utilisant au moins un piston à fonctionnement cyclique.

Dans un mode de réalisation préféré, ce procédé utilise au moins un actionneur électrique avec une tige reliée à un piston, lui-même relié à une bielle qui entraîne le vilebrequin d'un moteur.

De préférence ce procédé utilise au moins deux actionneurs électriques avec pour chacun d'entre eux une tige reliée à un piston, lui-même relié à une bielle qui entraîne le vilebrequin d'un moteur.

L'actionneur électrique ou l'ensemble des actionneurs électriques est de préférence piloté par au moins un système de commande, par exemple électronique ou mécanique, permettant de reconstituer le fonctionnement cyclique du piston ou des pistons, afin de tourner le ou les vilebrequins du moteur.

Selon des modes particuliers de réalisation :
- le procédé peut être mis en oeuvre dans le dispositif des moteurs à combustion interne déjà existants, par substitution de la force due à l'explosion par la force due au vérin électrique,
- le procédé peut être mis en oeuvre dans le dispositif de moteurs nouvellement conçus à cet effet.

Les dessins annexés illustrent l'invention :
- la Figure 1 représente les éléments de base, composants actifs du principe de fonctionnement du procédé,
- la Figure 2 représente les éléments de base, qui composent le principe de fonctionnement du procédé et son système de commande qui reconstitue le fonctionnement cyclique des pistons, et
- la Figure 3 représente les principaux éléments pour permettre la comparaison entre (A) un bloc moteur à explosion et (B) un bloc moteur agencé avec les éléments de base, composants actifs du principe de fonctionnement du procédé de l'invention.

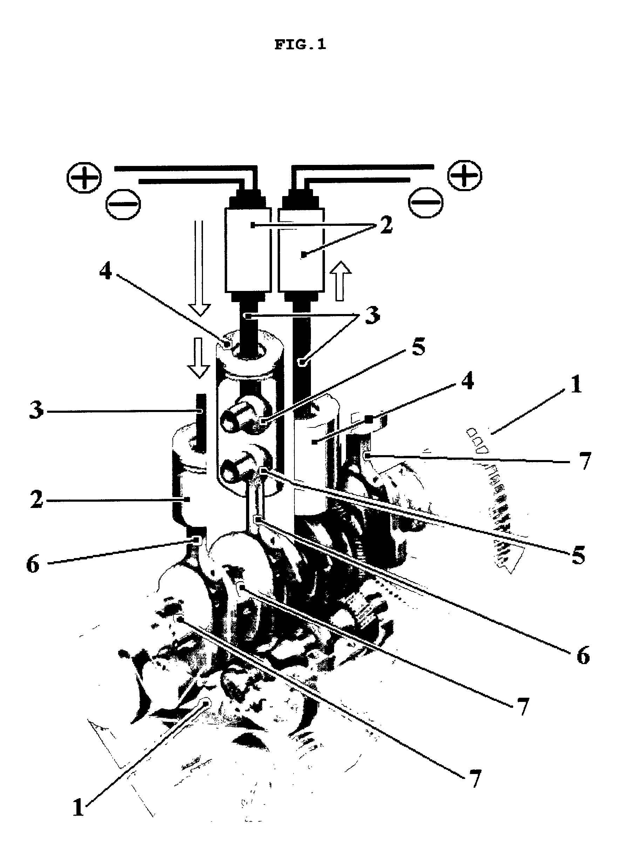

On peut distinguer dans la Figure 1 un moteur (1) agencé avec au moins deux actionneurs électriques (2) avec leurs tiges (3) adjointes aux pistons (4) avec des fixations (5) reliées de la même façon que les bielles (6) qui entraînent le vilebrequin (7) dans un mouvement de rotation.

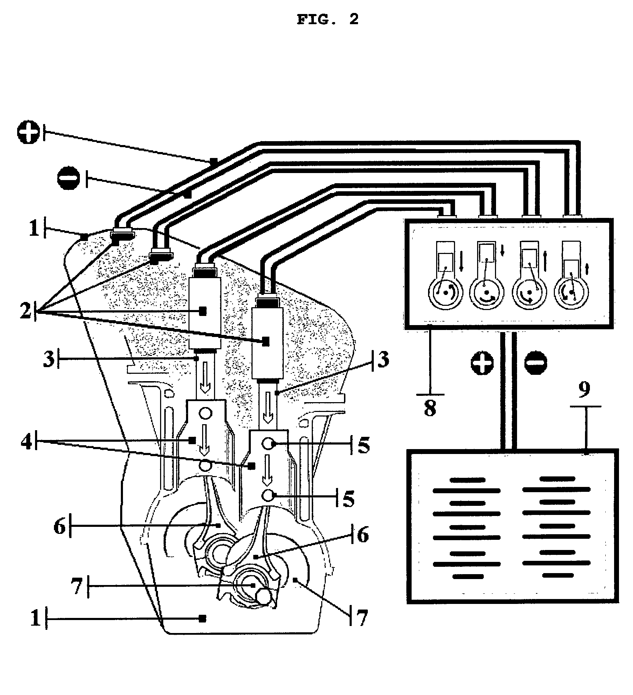

On peut distinguer dans la Figure 2 un moteur (1) agencé avec au moins deux actionneurs électriques (2) avec leurs tiges (3) adjointes aux pistons (4) avec des fixations (5) reliées de la même façon que les bielles (6) qui entraînent le vilebrequin (7) dans un mouvement de rotation, piloté par au moins un système de commande (8), le tout étant alimenté par une source d'énergie (9), par exemple de type batterie.

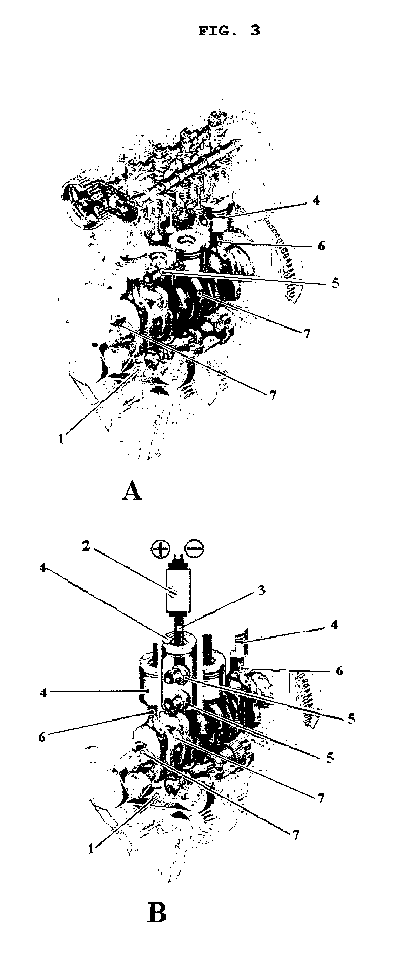

On peut distinguer dans la Figure 3:
- (A) un moteur à explosion (1) agencé avec des pistons (4), des fixations (5) qui entraînent le vilebrequin (7) dans un mouvement de rotation, et
- (B) un moteur (1) agencé avec au moins un actionneur électrique (2) avec sa tige (3) adjointe au piston (4) avec des fixations (5) reliées de la même façon que les bielles (6) qui entraînent le vilebrequin (7) dans un mouvement de rotation.

On peut constater que ces deux moteurs on les mêmes éléments de fonctionnement, à l'exception de la force d'action sur les pistons, dans le cas de (A) due à l'explosion, dans le cas de (B) la force du vérin électrique.

## Revendications

1. Procédé pour mouvoir au moins un piston à l'aide d'au moins un actionneur électrique (2) agissant comme substitut de la force d'action d'au moins un moteur ou une machine utilisant au moins un piston à fonctionnement cyclique.

2. Procédé selon la revendication 1, **caractérisé en ce qu'**il utilise au moins un actionneur électrique (2) avec une tige (3) reliée (5) à un piston (4) relié (5) à une bielle (6) qui entraîne le vilebrequin (7) d'un moteur (1).

3. Procédé selon la revendication 1, **caractérisé en ce qu'**il utilise au moins deux actionneurs électriques (2) avec pour chacun d'entre eux une tige (3) reliée (5) à un piston (4) relié (5) à une bielle (6) qui entraîne le vilebrequin (7) d'un moteur (1).

4. Procédé selon l'une des revendications précédentes, **caractérisé en ce que** l'actionneur électrique (2) ou l'ensemble des actionneurs électriques (2) est géré par un système de commande (8) qui le fait fonctionner en reconstituant le mouvement cyclique habituel des pistons.

5. Procédé selon l'une des revendications précédentes, **caractérisé, en ce que** l'actionneur électrique (2) ou chacun des actionneurs électriques (2), est un vérin électrique, un vérin électromécanique, un vérin électrohydraulique ou un vérin électromagnétique.

6. Utilisation du procédé selon l'une des revendications précédentes dans le dispositif des moteurs à combustion interne déjà existants ou de moteurs nouvellement conçus à cet effet.
